# EUROPÄISCHE PATENTANMELDUNG

(11) **EP 2 163 480 A1**
(43) Veröffentlichungstag der Anmeldung: **17.03.2010**
(21) Anmeldenummer: 08016159.9
(22) Anmeldetag: 13.09.2008
(51) Int. Cl.: B65B 59/00, B65B 65/00, H02B 1/30, H02B 1/32

(54) **Maschinengehäuse**

(71) Anmelder: Uhlmann Pac-Systeme GmbH & Co. KG, 88471 Laupheim (DE)
(72) Erfinder: Liebhardt, Jürgen, 88471 Laupheim (DE)
(74) Vertreter: Wächter, Jochen

(57) **Zusammenfassung**

Ein Maschinengehäuse (10) mit auf einem beweglichen Träger (3) angeordneten Steuerungsbauteilen (2a, 2b, 2c, 2d) weist eine Bewegungsvorrichtung auf, um den beweglichen Träger (3) zwischen einer Arbeitsstellung in dem Maschinengehäuse (10) und einer Wartungsstellung außerhalb des Maschinengehäuses (10) zu bewegen. Die Bewegungsvorrichtung ist ausgestaltet, den beweglichen Träger (3) durch Schwenken um eine waagerechte Schwenkachse (4) zu bewegen, wobei die waagerechte Schwenkachse (4) in einem rechten Winkel zu einer Zugangsrichtung (14) an das Maschinengehäuse (10) steht.

## Beschreibung

Die vorliegende Erfindung betrifft Maschinengehäuse. Insbesondere betrifft sie Maschinengehäuse für Verpackungsmaschinen, bei denen in dem Maschinengehäuse auf einem Träger Steuerungsbauteile angeordnet sind.

Bei herkömmlichen Maschinengehäusen für Verpackungsmaschinen sind Steuerungsbauteile zur Steuerung der Maschinenelemente auf einem Träger starr in dem Maschinengehäuse angeordnet. Diese herkömmlichen Anordnungen weisen den Nachteil auf, dass bei einer geringen Einbautiefe der Steuerungsbauteile das sich hinter den Steuerungsbauteilen befindende Bauvolumen in dem Maschinengehäuse unzugänglich ist und damit für viele Einsatzzwecke nicht genutzt werden kann. Ein weiterer Nachteil der herkömmlichen Anordnungen liegt darin, dass für eine gegebene Anzahl an Steuerungsbauteilen dieser Bereich in dem Maschinengehäuse eine große Breite aufweisen muss und aus diesen Gründen eine relative große Zugangsfläche vor der Rückwand des Maschinengehäuses zum Öffnen der Türen für einen freien Zugang auf die Steuerungsbauteile frei gehalten werden muss. Alternativ sind für herkömmliche Verpackungsmaschinen die Steuerungsbauteile in einem separaten Schaltschrank angeordnet. Diese Ausgestaltung weist den Nachteil auf, dass für den Transport der Maschinen separate Fixierungen notwendig sind sowie dass der Aufbau und der Abbau von Kabelkanälen an den freistehenden Schaltschränken aufwendig sind und dass ein erhöhter Platzbedarf für die Maschinen erforderlich ist.

Der Erfindung liegt somit die Aufgabe zugrunde, ein Maschinengehäuse mit einem Träger für Steuerungsbauteile bereit zu stellen, bei dem das Bauvolumen in dem Maschinengehäuse und der Raum vor dem Maschinengehäuse besser genutzt werden können.

Bei einem Maschinengehäuse mit einem Träger der eingangs genannten Art wird diese Aufgabe dadurch gelöst, dass der Träger beweglich ausgestaltet ist und dass in dem Maschinengehäuse eine Bewegungsvorrichtung angeordnet ist, um den beweglichen Träger zwischen einer Arbeitsstellung in dem Maschinengehäuse und einer Wartungsstellung außerhalb des Maschinengehäuses zu bewegen. Da der bewegliche Träger mit den Steuerungsbauteilen aus dem Maschinengehäuse bewegt werden kann, kann auf die Steuerungsbauteile in der Wartungsstellung außerhalb des Maschinengehäuses zugegriffen werden. Aus diesem Grund ist für einen Zugriff auf die Steuerungsbauteile eine Ausrichtung der Steuerungsbauteile auf die Zugangsrichtung entlang der Rückseite des Maschinengehäuses nicht mehr notwendig ist, so dass eine kompaktere Anordnung der Steuerungsbauteile unter Ausnutzung der Tiefe des Maschinengehäuses möglich wird.

Bei dem Maschinengehäuse hat es sich als vorteilhaft erwiesen, wenn die Bewegungsvorrichtung den beweglichen Träger durch Schwenken über eine waagerechte Schwenkachse bewegt, wobei die waagerechte Schwenkachse in einem rechten Winkel zu einer Zugangsrichtung an das Maschinengehäuse steht. Dieses Kippen des beweglichen Trägers mit den Steuerungsbauteilen aus dem Maschinengehäuse heraus gewährleistet, dass in der Wartungsstellung als eine Endlage der bewegliche Träger vollständig aus dem Maschinengehäuse bewegt worden ist. Zusätzlich ist eine Beleuchtung nicht erforderlich, da im ausgeklappten Zustand der bewegliche Träger nach oben offen ist, so dass die Raumbeleuchtung verwendet werden kann. Ein weiterer Vorteil liegt darin, dass die normalerweise waagerecht angeordneten Steuerungsbauteile auf dem beweglichen Träger im ausgeschwenkten Zustand senkrecht gestellt sind und demzufolge besser einsehbar sind. Weiterhin kann durch die Kippfunktion der Raum hinter dem Träger in dem Maschinengehäuse für zusätzliche Installationen verwendet werden, so dass das Bauvolumen besser ausgenutzt wird und kleinere Maschinen möglich werden.

Bevorzugt weist die Bewegungsvorrichtung zwei Ausgleichselemente zum Gewichtsausgleich auf. Durch die Verwendung zweier Ausgleichselemente während des Schwenkens des beweglichen Trägers wird ein Gewichtsausgleich für unterschiedliche Schwerpunktlagen und Gewichte erreicht, so dass die zum Schwenken erforderliche Kraft verringert wird. Bei einer vorteilhaften Ausgestaltung umfassen die Ausgleichselemente Federelemente und / oder Gasdruckdämpfer.

Als günstig hat es sich bei Maschinengehäusen erwiesen, wenn eine bewegliche Kabelabfangschiene in einem Kabelführungswinkel von 30 bis 60 Grad zur Horizontalen und zur waagerechten Schwenkachse angeordnet ist. In diesem Zusammenhang hat es sich als besonders günstig erwiesen, wenn der Kabelführungswinkel 45 Grad beträgt. Auf diese Weise kann eine Hubbewegung des Kabelbundes auf ein Minimum begrenzt werden, so dass eine feststehende Kabelabfangschiene nahe der waagerechten Schwenkachse angeordnet werden kann. Eine parallele Anordnung der Kabel ermöglicht eine große Anzahl an Kabelverbindungen zwischen dem beweglichen Träger und dem Maschinenbett. Ein zusätzlicher Vorteil liegt darin, dass kein Kappelschlepp aus Gliederelementen erforderlich ist.

Bevorzugt ist bei dem Maschinengehäuse eine Wand des beweglichen Trägers als eine Rückwand des Maschinengehäuses und eine Deckfläche des beweglichen Trägers als eine Deckfläche des Maschinengehäuses ausgebildet sind, so dass ein Teil der Maschinenverkleidung durch die Wände des beweglichen Träger ersetzt werden kann.

Als vorteilhaft hat es sich bei dem Maschinengehäuse erwiesen, wenn der beweglichen Träger parallel zu einer Seitenwand des Maschinengehäuses angeordnet ist, wodurch das Schwenken um die waagerechte Schwenkachse unterstützt wird.

Weiterhin hat es sich als nützlich erwiesen, wenn die Steuerungsbauteile auf dem beweglichen Träger in einer zweiseitigen Bestückung angeordnet sind. Dadurch kann eine besonders kompakte Bestückung des beweglichen Trägers erreicht werden.

Die vorliegende Erfindung ist nicht auf einen beweglichen Träger mit Steuerungsbauteilen beschränkt, sondern sie kann auch für einen beweglichen Träger mit anderen Bauteile eingesetzt werden, die zwischen einer Arbeitsstellung im Maschinengehäuse und einer Wartungsstellung außerhalb des Maschinengehäuses bewegt werden.

Im Folgenden wird die Erfindung an einem in den Zeichnungen dargestellten Ausführungsbeispiel näher erläutert; es zeigen:
- Fig. 1: eine schematische Draufsicht auf ein herkömmliches Maschinengehäuse,
- Fig. 2: eine schematische Draufsicht auf ein erfindungsgemäßes Maschinengehäuse,
- Fig. 3: eine schematische Seitenansicht auf das Maschinengehäuse mit dem beweglichen Träger und Ausgleichselementen in der Arbeitsstellung,
- Fig. 4: eine schematische Seitenansicht auf das Maschinengehäuse mit dem beweglichen Träger und Ausgleichselementen in einer Zwischenstellung beim Schwenken,
- Fig. 5: eine schematische Seitenansicht auf das Maschinengehäuse mit dem beweglichen Träger und Ausgleichselementen in der Wartungsstellung,
- Fig. 6: eine schematische Darstellung des Lastausgleiches in der Arbeitsstellung,
- Fig. 7: eine schematische Seitenansicht einer Sockeleinheit für den beweglichen Träger in einer Arbeitsstellung,
- Fig. 8: eine schematische Darstellung des Lastausgleiches in einer Zwischenstellung beim Schwenken,
- Fig. 9: eine schematische Seitenansicht der Sockeleinheit für den beweglichen Träger in einer Wartungsstellung,
- Fig. 10: eine Darstellung des Lastausgleiches für den beweglichen Träger in der Arbeitsstellung,
- Fig. 11: eine Darstellung des Lastausgleiches für den beweglichen Träger in der Wartungsstellung,
- Fig. 12: eine perspektivische Darstellung der schwenkbaren Deckfläche und der schwenkbaren Frontfläche,
- Fig. 13: eine schematische Seitenansicht der schwenkbaren Deckfläche und der schwenkbaren Frontfläche,
- Fig. 14: eine schematische Seitenansicht der beweglichen Trägers mit einer Kabelabfangschiene, und

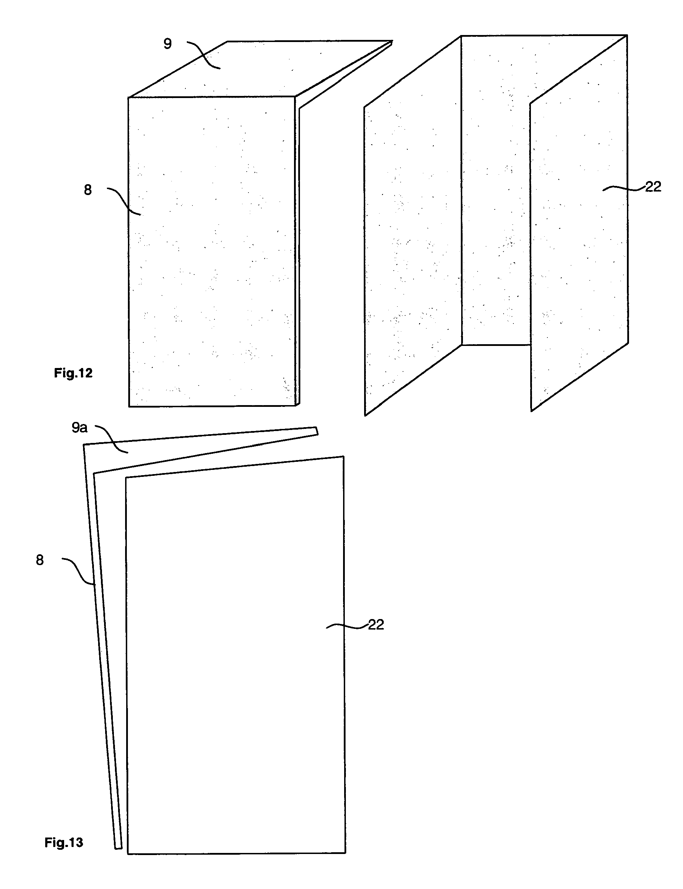

- Fig. 13: eine schematische Draufsicht der beweglichen Trägers mit der Kabelabfangschiene.

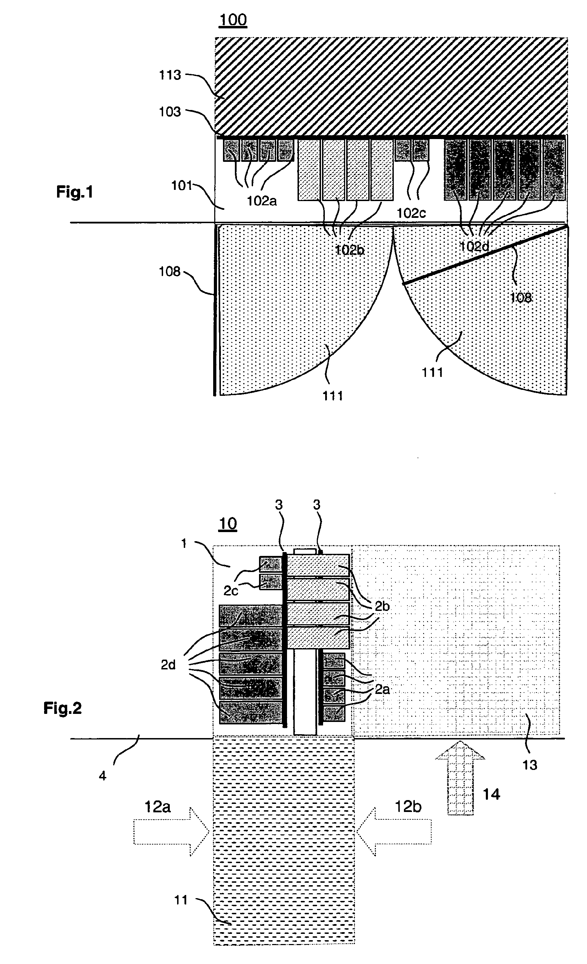

Zum besseren Verständnis der vorliegenden Erfindung ist in der Fig. 1 ein herkömmliches Maschinengehäuse 100 mit einem unbeweglichen Träger 103 gezeigt, an dem Steuerungsbauteile 102a, 102b, 102c, 102d in einer geringer Einbautiefe mit Ausrichtung auf die Zugangsrichtung angeordnet sind. Der in dem herkömmlichen Maschinengehäuse 100 fest angeordnete Träger 103 versperrt in dem herkömmlichen Trägerbereich 101 den Zugriff auf das Bauvolumen 113 über die gesamte Breite, so dass das Bauvolumen 113 unzugänglich ist. Weiterhin benötigen die Türen 111 vor der Rückwand des herkömmlichen Maschinengehäuses 100 zum Öffnen eine größere Freifläche 111.

Fig. 2 zeigt ein Maschinengehäuse 10 mit einem beweglichen Träger 3 in einer Arbeitsstellung in dem Maschinengehäuse 10 nach der vorliegenden Erfindung, wobei an dem beweglichen Träger 3 Steuerungsbauteile 2a, 2b, 2c, 2d angeordnet sind. In diesem Ausführungsbeispiel ist die Montageebene des beweglichen Trägers 3 in dem Maschinengehäuse 10 um 90° gegenüber der Montageebene des unbeweglichen Trägers 103 in dem herkömmlichen Maschinengehäuse 110 gedreht. Dies bewirkt, dass ein Teil des herkömmlich benötigten Raumes für zusätzliche Einbauten frei wird oder ein Zugang zu den dahinter liegenden Bereichen aus der Zugangsrichtung 14 ermöglicht wird, so dass ein zusätzliches Bauvolumen 13 bereit gestellt werden kann. Der bewegliche Träger 3 weist eine beidseitige Bestückung mit den Steuerungsbauteilen 2a, 2b, 2c, 2d auf, wobei der bewegliche Träger 3 in der Wartungsstellung außerhalb des Maschinengehäuses 10 die Freifläche 11 benötigt, wobei bei einer beidseitigen Bestückung mit Steuerungsbauteilen Zugang aus einer ersten Wartungszugangsrichtung 12a und aus einer zweiten Wartungszugangsrichtung 12b erfolgt.

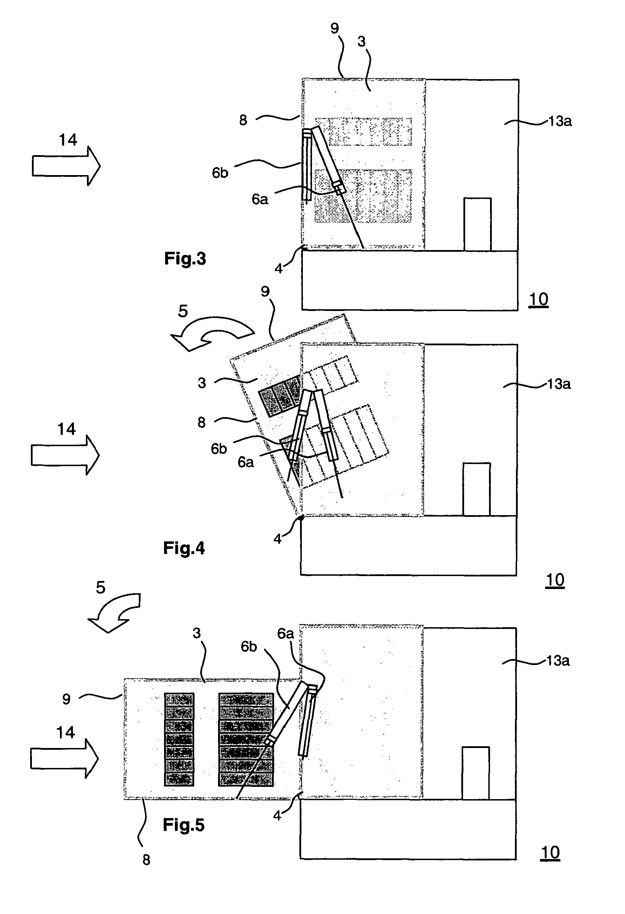

In den Figuren 3 bis 5 ist ein Ablauf eines Schwenkens des beweglichen Trägers 3 aus der Arbeitsstellung in dem Maschinengehäuse 10 in die Wartungsstellung außerhalb des Maschinengehäuses 10 dargestellt. Fig. 3 zeigt einen schematischen Querschnitt durch das Maschinengehäuse 10 mit dem beweglichen Träger 3 in Arbeitsstellung, wobei ein zusätzliches Bauvolumen 13a aus der Zugangsrichtung 14 aus gesehen sich hinter dem Trägerbereich 1 befindet. Fig. 4 zeigt einen schematischen Querschnitt durch das Maschinengehäuse 10, bei dem sich der bewegliche Träger 3 in einer Zwischenstellung befindet, wobei ein Lastausgleich über ein erstes Ausgleichselement 6a und ein zweites Ausgleichselement 6b erfolgt und ein Pfeil 5 die Schwenkrichtung der beweglichen Trägers 3 um eine horizontale Schwenkachse 4 anzeigt. Die horizontale Schwenkachse 4 steht in einem rechten Winkel zu einer Zugangsrichtung 14 an die Rückseite des Maschinengehäuses 10. Fig. 5 zeigt einen schematischen Querschnitt durch das Maschinengehäuse 10, bei dem sich der bewegliche Träger 3 in einer Wartungsstellung außerhalb des Maschinengehäuses 10 befindet. In der Wartungsstellung ist der bewegliche Träger 10 um 90° gegenüber der Arbeitsstellung gekippt, so dass die Steuerungsbauteile 2a, 2b, 2c, 2d, die in der Arbeitsstellung in einer waagerecht Ausrichtung an dem beweglichen Träger 3 angeordnet sind, in der Wartungsstellung in einer senkrechten Ausrichtung angeordnet sind, wie in der Fig. 5 dargestellt ist, wodurch die Bedienbarkeit verbessert ist.

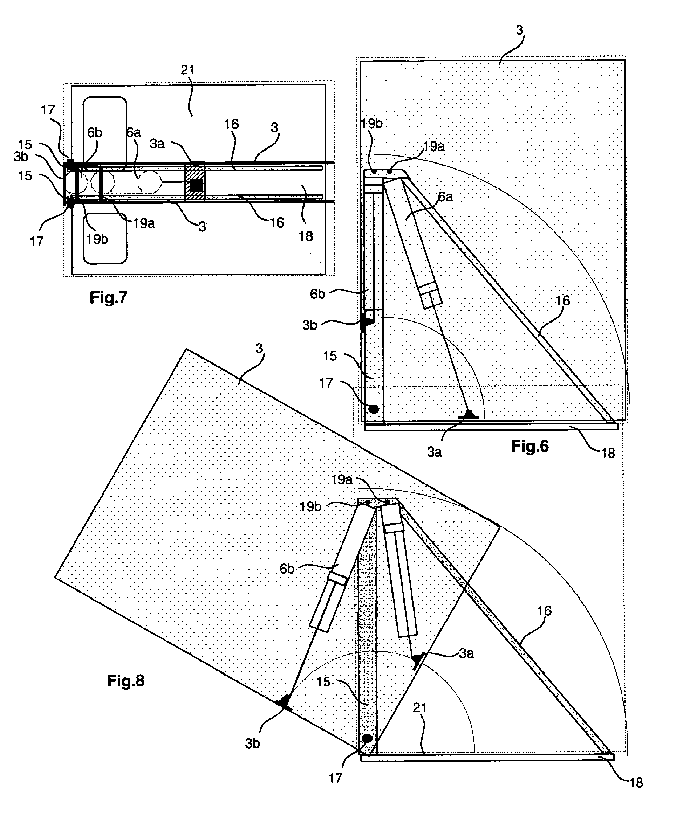

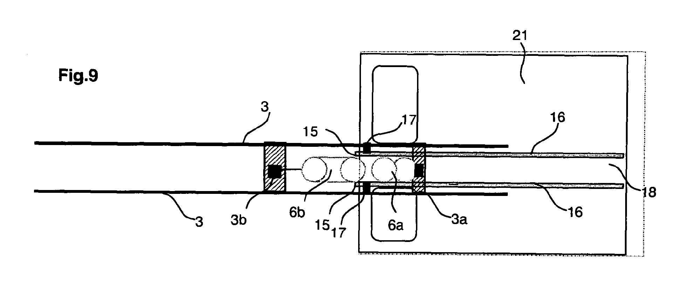

Fig. 6 bis 9 zeigen eine detailierte Darstellung des Lastausgleiches bei dem beweglichen Träger 3 und eine entsprechend ausgestaltete Sockeleinheit 18 für den beweglichen Träger 3. Die Sockeleinheit 18 umfasst einen senkrechten Rahmen 15 für das erste Ausgleichselement 6a und das zweite Ausgleichselement 6b und ein schräges Abstützelement 16 für den senkrechten Rahmen 15. Unterhalb des beweglichen Trägers 3 ist in dem Maschinengehäuse 10 die Sockeleinheit 18 für den beweglichen Träger 3 angeordnet, wobei die Sockeleinheit 18 z. B ein Maschinengestell umfassen kann. Am unteren Ende des senkrechten Rahmens 15 sind beidseitig zwei Kipplager 17 zur Schwenkung um die Schwenkachse 4 angebracht. Der bewegliche Träger umfasst zwei parallele Platten, die mit zwei Verbindungselementen 3a und 3b verbunden sind. Die beiden Verbindungselemente 3a und 3b bilden einen unteren Montagepunkt für das erste Ausgleichselement 6a und das zweite Ausgleichselement 6b. Weiterhin befindet sich an der Oberseite 21 der Sockeleinheit 18 jeweils ein erstes Führungselement 19a und ein zweites Führungselement 19b für das erste Ausgleichselement 6a und das zweite Ausgleichselement 6b.

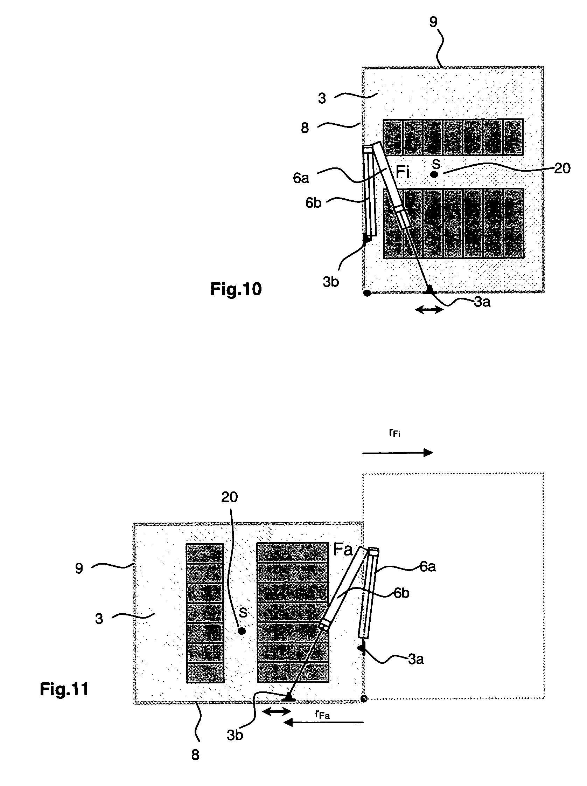

Die Figuren 10 und 11 zeigen schematische Darstellungen zum Lastausgleich in der Arbeitsstellung und in der Wartungsstellung. Der Lastausgleich in der Arbeitsstellung, der einem eingeschwenkten Zustand des beweglichen Trägers 3 entspricht, wird über das erste Ausgleichselement 6a, das in diesem Ausführungsbeispiel ein erstes Federelement umfasst, in Kombination mit einem ersten Radius r_{Fi} des Federangriffspunktes des ersten Federelementes derart bewirkt, dass im eingeschwenkten Zustand ein vollständiger Gewichtsausgleich erreicht wird.

Weiterhin wird der Lastausgleich in der Wartungsstellung, der einem ausgeschwenkten Zustand des beweglichen Trägers 3 entspricht, über das zweite Ausgleichselement 6b, das in diesem Ausführungsbeispiel ein zweites Federelement umfasst, in Kombination mit einem zweiten Radius r_{Fa} des Federangriffspunktes des zweiten Federelementes derart bewirkt, dass im ausgeschwenkten Zustand ein vollständiger Gewichtsausgleich erreicht wird. Zur Erläuterung des Lastausgleiches ist zusätzlich der Schwerpunkt 20 in den Figuren 10 und 11 dargestellt.

Die Figuren 12 und 13 zeigen eine perspektivische Darstellung bzw. eine schematische Seitenansicht einer Deckfläche 9 und einer Frontfläche 8 für den beweglichen Träger 3. Die bewegliche Deckfläche 9 und die bewegliche Frontfläche 8 sind mit dem beweglichen Träger 3 starr verbunden und werden bei einem Schwenken des beweglichen Trägers 3 mitbewegt. Weiterhin kann der Trägerbereich 1 durch seitliche Verkleidungselemente 22 geschützt sein, wobei die seitlichen Verkleidungselemente 22 auch die Seitenfläche des Maschinengehäuses 10 teilweise oder vollständig bilden können. Bei einem Aufbau auf einem Maschinengestell ist eine eigene Bodenverkleidung für den Trägerbereich 1 nicht erforderlich. Bevorzugt weist die bewegliche Deckfläche 9 an einem Kantenbereich 9a eine zu der Frontfläche 8 ansteigende Schräge auf, wobei die bewegliche Deckfläche 9 an dem entsprechend geeignet ausgestalteten Verkleidungselement 22 in der Arbeitsstellung anliegt. Die Frontfläche 8 des beweglichen Träger 3 kann einen Teil der Rückseite des Maschinengehäuses 10 bilden.

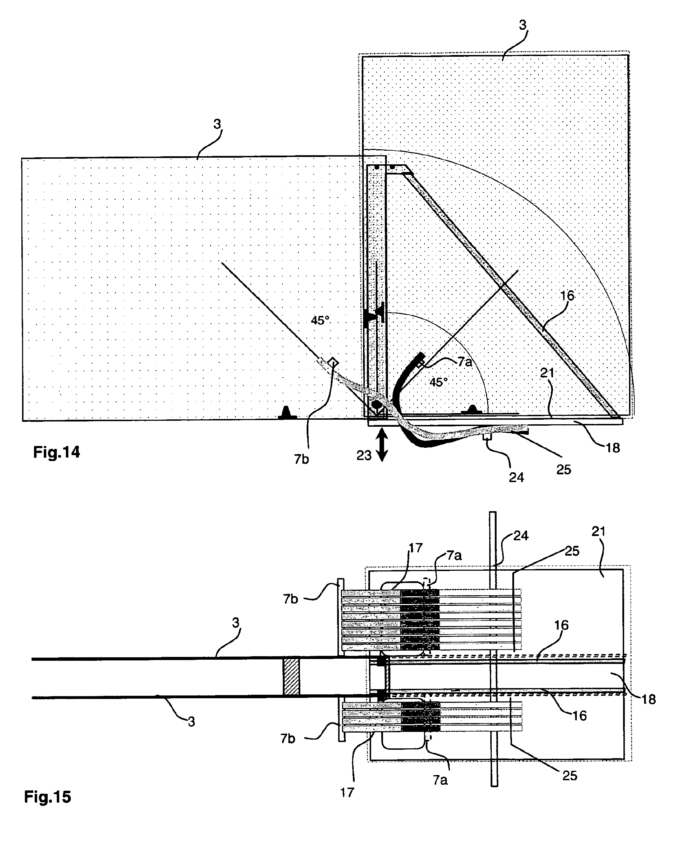

Die Figuren 14 und 15 zeigen eine schematische Seitenansicht bzw. eine schematische Draufsicht für den Kabelübergang von einer Sockeleinheit 18, insbesondere einem Maschinenbett zu den beweglichen Träger 3. Eine bewegliche Kabelabfangschiene ist an dem beweglichen Träger 3 angebracht, wobei 7 die bewegliche Kabelabfangschiene für den beweglichen Träger 3 in der Arbeitsstellung und 7' die bewegliche Kabelabfangschiene für den beweglichen Träger 3 in der Wartungsstellung bezeichnet. Bevorzugt ist die bewegliche Kabelabfangschiene 7 unter einem Winkel von 45° zu der Horizontalen in der Nähe der waagerechten Schwenkachse 4 angeordnet. Dadurch kann die Hubbewegung 23 der Kabel während des Schwenkens des beweglichen Trägers 3 aus der Arbeitsstellung in die Wartungsstellung auf ein Minimum begrenzt werden. Zur Unterstützung der Kabelführung sind in der Sockeleinheit 18 eine feststehende Kabelabfangschiene 7a in der Nähe der waagerechten Schwenkachse 4 und ein Kabelführungselement 7b angeordnet. Eine parallele Anordnung der Kabel ermöglicht eine große Anzahl an Kabelverbindungen zwischen dem beweglichen Träger 3 und der Sockeleinheit 18.

Bezugszeichenliste:
- 1: Trägerbereich
- 2a bis: 2b erste bis vierte Steuerungsbauteile
- 3: beweglicher Träger
- 4: waagerechte Schwenkachse
- 5: Schwenkbewegung
- 6a: erstes Ausgleichselement
- 6b: zweites Ausgleichselement
- 7: bewegliche Kabelabfangschiene in Arbeitsstellung
- 7': bewegliche Kabelabfangschiene in Wartungsstellung
- 7a: feststehende Kabelabfangschiene
- 7b: Kabelführungselement
- 8: Frontfläche des beweglichen Trägers
- 9: Deckfläche des beweglichen Trägers
- 10: Maschinengehäuse
- 11: Freifläche
- 12a: erste Wartungszugangsrichtung
- 12b: zweite Wartungszugangsrichtung
- 13: zusätzliches Bauvolumen, das für Installationen im Maschinengehäuse verfügbar ist
- 13a: zweites zusätzliches Bauvolumen
- 14: Zugangsrichtung an das Maschinengehäuse
- 15: Rahmen für Ausgleichselemente
- 16: schräges Abstützelement für Rahmen
- 17: Kipplager
- 18: Sockeleinheit
- 19a: erstes Führungselement
- 19b: zweites Führungselement
- 20: Schwerpunkt
- 21: Oberseite der Sockeleinheit
- 22: Verkleidungselement
- 23: Hubbewegung der Kabel
- r_{Fi}: erster Radius des Federangriffspunktes für das erste Federelement im eingeschwenkten Zustand
- r_{Fa}: zweiter Radius des Federangriffspunktes für das zweite Federelement im ausgeschwenkten Zustand
- 100: herkömmliches Maschinengehäuse
- 101: herkömmlichen Trägerbereich
- 102a bis: 102b erste bis vierte Steuerungsbauteile für das herkömmliche Maschinengehäuse
- 103: unbeweglicher Träger für das herkömmliche Maschinengehäuse
- 108: Tür für das herkömmliche Maschinengehäuse
- 111: Raum, der für die Türen erforderlich ist
- 113: herkömmliche Freifläche

## Patentansprüche

1. Maschinengehäuse (10) mit einem Träger (3), wobei an dem Träger (3) Steuerungsbauteile (2a, 2b, 2c, 2d) angeordnet sind, **dadurch gekennzeichnet, dass** der Träger (3) beweglich ausgestaltet ist und dass
in dem Maschinengehäuse (10) eine Bewegungsvorrichtung angeordnet ist, um den beweglichen Träger (3) zwischen einer Arbeitsstellung in dem
Maschinengehäuse (10) und einer Wartungsstellung außerhalb des Maschinengehäuses (10) zu bewegen.

2. Maschinengehäuse (10) nach Anspruch 1, **dadurch gekennzeichnet, dass** die Bewegungsvorrichtung ausgestaltet ist, den beweglichen Träger (3) durch Schwenken um eine waagerechte Schwenkachse (4) zu bewegen, wobei die waagerechte Schwenkachse (4) in einem rechten Winkel zu einer Zugangsrichtung (14) an die Grundeinheit (1) steht.

3. Maschinengehäuse (10) nach Anspruch 2, **dadurch gekennzeichnet, dass** das Maschinengehäuse (10) eine Sockeleinheit (18) für den beweglichen Träger (3) aufweist und dass die waagerechte Schwenkachse (4) in einer Oberseite (21) der Sockeleinheit (18) im Bereich einer Rückwand des Maschinengehäuses (10) angeordnet ist.

4. Maschinengehäuse (10) nach Anspruch 2 oder 3, **dadurch gekennzeichnet, dass** in dem Maschinengehäuse (10) eine Kabelabfangschiene (7) mit einem Kabelführungswinkel von 30 bis 60
Grad zu der Horizontalen in der Nähe der waagerechten Schwenkachse (4) angeordnet ist.

5. Maschinengehäuse (10) nach Anspruch 4, **dadurch gekennzeichnet, dass** der Kabelführungswinkel 45 Grad beträgt.

6. Maschinengehäuse (10) nach einem der Ansprüche 2 bis 5, **dadurch gekennzeichnet, dass** die Bewegungsvorrichtung zwei Ausgleichselemente (6a, 6b) zum Gewichtsausgleich aufweist.

7. Maschinengehäuse (10) nach Anspruch 6, **dadurch gekennzeichnet, dass** die Ausgleichselemente (6a, 6b) Federelemente und / oder Gasdruckdämpfer umfassen.

8. Maschinengehäuse (10) nach einem der vorhergehenden Ansprüche, **dadurch gekennzeichnet, dass** die Ausrichtung des beweglichen Trägers (3) in der Arbeitsstellung in einem Winkel von ungefähr 90° zu der Ausrichtung des beweglichen Trägers (3) in der Wartungsstellung steht.

9. Maschinengehäuse (10) nach einem der vorhergehenden Ansprüche, **dadurch gekennzeichnet, dass** eine Wand (8) des beweglichen Trägers (3) als eine Rückwand des Maschinengehäuses (10) und eine Deckfläche (9) des beweglichen Trägers (3) als eine Deckfläche des Maschinengehäuses (10) ausgebildet sind.

10. Maschinengehäuse (10) nach einem der vorhergehenden Ansprüche, **dadurch gekennzeichnet, dass** der beweglichen Träger (3) parallel zu einer Seitenwand des Maschinengehäuses (10) angeordnet ist.

11. Maschinengehäuse (10) nach einem der vorhergehenden Ansprüche, **dadurch gekennzeichnet, dass** die Steuerungsbauteile (2a, 2b, 2c, 2d)
auf dem beweglichen Träger (3) in einer zweiseitigen Bestückung angeordnet sind.
